Europäisches Patentamt

(19) European Patent Office

Office européen des brevets

(11) Veröffentlichungsnummer: **0 011 159**
**A1**

(12) **EUROPÄISCHE PATENTANMELDUNG**

(21) Anmeldenummer: **79104102.3**

(22) Anmeldetag: **23.10.79**

(51) Int. Cl.³: **F 16 D 3/26**
**F 16 D 3/28**

(30) Priorität: **20.11.78 DE 2850301**

(43) Veröffentlichungstag der Anmeldung:
**28.05.80 Patentblatt 80 ′11**

(84) Benannte Vertragsstaaten:
**AT BE CH DE FR GB IT LU NL SE**

(71) Anmelder: **Chivari, Ilie**
**Berliner Straße 1**
**D-4690 Herne 2(DE)**

(72) Erfinder: **Chivari, Ilie**
**Berliner Straße 1**
**D-4690 Herne 2(DE)**

(74) Vertreter: **Weisse, Jürgen, Dipl.-Phys. et al,**
**Bökenbusch 41 Postfach 11 03 86**
**D-5620 Velbert 11-Langenberg(DE)**

(54) **Homokinetisches Gelenk.**

(57) Ein homokinetisches Gelenk überträgt eine Drehbewegung eines Antriebsgliedes (10) winkeltreu auf ein Abtriebsglied (22), auch wenn die Eingangs- und die Ausgangsachse, d.h. die Umlaufachsen des Antriebs- und des Abtriebsgliedes, einen Winkel einschließen. Das Gelenk enthält ein Zwischenglied (32), welches um eine zur Antriebsachse (12) senkrechte erste Achse (42) drehbar an dem Antriebsglied (10) angelenkt ist. Das Zwischenglied (32) ist von einem Ring (48) umgeben. Dieser Ring (48) ist um eine zweite, zu der ersten Achse (42) senkrechte Achse (54) drehbar an dem Zwischenglied (32) angelenkt. Der Ring (48) ist auch an dem Abtriebsglied (22) um eine dritte Achse (64) drehbar angelenkt, die senkrecht zur zweiten Achse liegt. Es sind Mittel zum Festlegen der Lage des Ringes (48) vorgesehen. Bei einer Ausführung mit veränderlichem Knickwinkel sind diese Mittel von einer Kegelradanordnung gebildet, bei einer Ausführung mit festem Knickwinkel bestehen die Festlegemittel aus Gleitschuhen und einer planen Anlagefläche. Bei einer anderen Ausführung sind die Teile durch Lager mit gummielastischen Massen elastisch an eine relative Ruhelage gefesselt.

EP 0 011 159 A1

./...

FIG.1

FIG.2

Homokinetisches Gelenk

Die Erfindung betrifft ein homokinetisches Gelenk, enthaltend: ein um eine Eingangsachse drehbares Antriebsglied, ein Zwischenglied, das um eine zu der Eingangsachse senkrechte erste Achse verdrehbar an dem Antriebsglied angelenkt ist, ein um eine Ausgangsachse drehbares Abtriebsglied und Kupplungsmittel zwischen dem Zwischenglied und dem Abtriebsglied, welche einerseits um eine zu der ersten Achse senkrechte zweite Achse verdrehbar an dem Zwischenglied und andererseits um eine zu der Ausgangsachse senkrechte dritte Achse verdrehbar an dem Abtriebsglied angelenkt sind.

Zur Übertragung einer Drehbewegung von einem um eine Eingangsachse rotierenden Eingangsglied auf ein Ausgangsglied, das um eine gegenüber der Eingangsachse winkelversetzte Ausgangsachse umläuft, sind Kardangelenke bekannt. Übliche Kardangelenke enthalten einen Kreuzkörper mit zwei Paaren von senkrecht zueinander angeordneten Lagerzapfen. Mit einem Paar von Lagerzapfen ist der Kreuzkörper um eine erste, zur Eingangsachse senkrechte Achse in einem gabelförmigen Ansatz

0011159

des Antriebsgliedes verdrehbar gelagert. Das Abtriebsglied ist mit einem entsprechenden gabelförmigen Ansatz auf dem anderen Paar von Lagerzapfen des Kreuzkörpers gelagert, die eine Verdrehung um eine zweite, zu der ersten Achse senkrechte Achse gestatten. Ein solches Kardangelenk hat den Nachteil, daß es nicht homokinetisch ist, d.h. eine gleichförmige Drehbewegung des Antriebsgliedes wird in eine ungleichförmige Drehbewegung des Abtriebsgliedes umgesetzt, wenn Eingangsachse und Ausgangsachse einen Winkel miteinander einschließen.

Es ist daher bekannt, zwei derartige Kardangelenke über eine Zwischenwelle hintereinanderzuschalten, wobei der Winkel zwischen Eingangsachse und Umlaufachse der Zwischenwelle genau so groß gewählt wird wie der Winkel zwischen der Umlaufachse der Zwischenwelle und der Ausgangsachse.

Eine solche Anordnung ist relativ aufwendig und erfordert erheblichen Raum.

Der Erfindung liegt die Aufgabe zugrunde, ein homokinetisches Gelenk der eingangs definierten Art in einfacher und raumsparender Weise aufzubauen.

Erfindungsgemäß wird diese Aufgabe dadurch gelöst, daß die Kupplungsmittel von einem Ring gebildet sind, welcher das Zwischenglied umgibt, daß die dritte Achse, um welche dieser Ring verdrehbar an dem Abtriebsglied gelagert ist senkrecht zu der zweiten Achse verläuft und daß Mittel zur Festlegung der Lage des Ringes vorgesehen sind.

Durch die Verwendung des Ringes wird erreicht, daß sich während des Umlaufs die dritte Achse stets genau in der gleichen, zu der zweiten Achse senkrechten Ebene befindet wie die erste Achse, so daß eine homokinetische Bewegungsübertragung gewährleistet ist. Der Ring mit seiner Lagerung bringt einen zusätzlichen Freiheitsgrad, so daß das System unterbestimmt ist. Diese Unterbestimmung wird durch Mittel zur Festlegung der Lage des Ringes beseitigt. Die Festlegung kann dabei kinematisch oder aber auch dynamisch erfolgen.

Weitere Ausgestaltungen der Erfindung sind Gegenstand der Unteransprüche.

Die Erfindung ist nachstehend an einigen Ausführungsbeispielen unter Bezugnahme auf die zugehörigen Zeichnungen näher erläutert:

Fig. 1     zeigt eine Längsansicht eines homokinetischen Gelenks.

Fig. 2     zeigt einen Schnitt längs der Linie A-B von Fig. 1.

Fig. 3     zeigt eine Ansicht ähnlich Fig. 1 eines homokinetischen Gelenks, welches für variable Winkel zwischen Eingangsachse und Ausgangsachse geeignet ist.

Fig. 4     zeigt einen Schnitt längs der Linie C-D von Fig. 3.

Fig. 5     zeigt eine bei dem Gelenk von Fig. 3 und 4 verwendete Kegelradanordnung in einer Ansicht in Richtung des Pfeils B von Fig. 6.

Fig. 6    zeigt eine Ansicht, teilweise im Schnitt,
          der Kegelanordnung in Richtung des Pfeils A
          von Fig. 5.

Fig. 7    zeigt einen Schnitt längs der Linie VII-VII
          von Fig. 6.

Fig. 8    zeigt einen Schnitt längs der Linie E-F von
          Fig. 7.

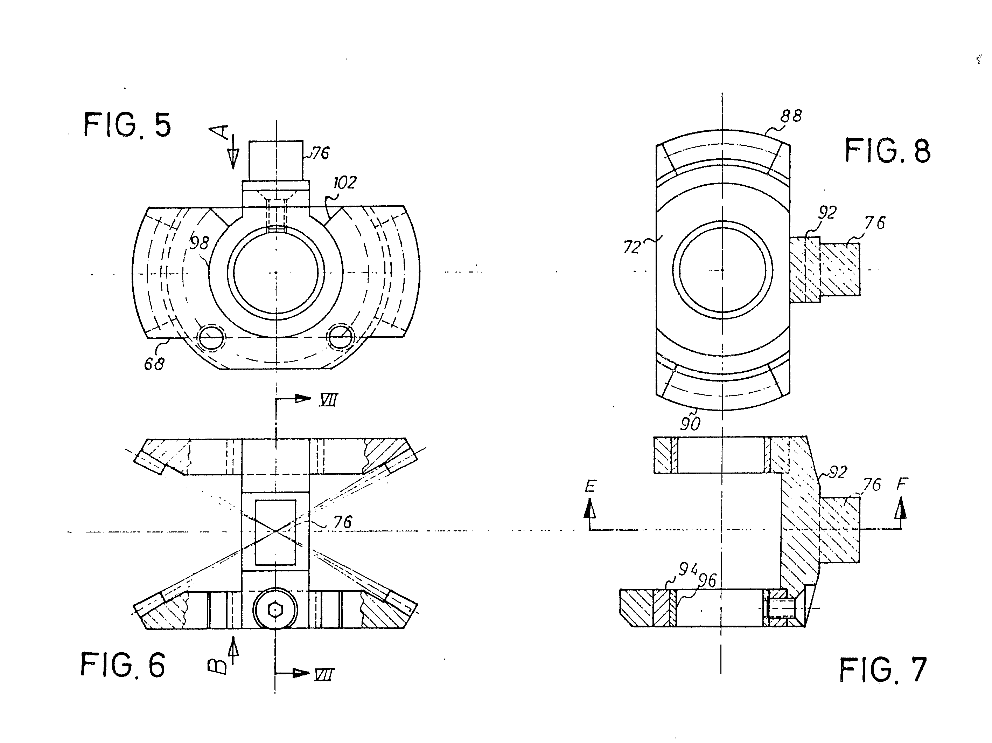

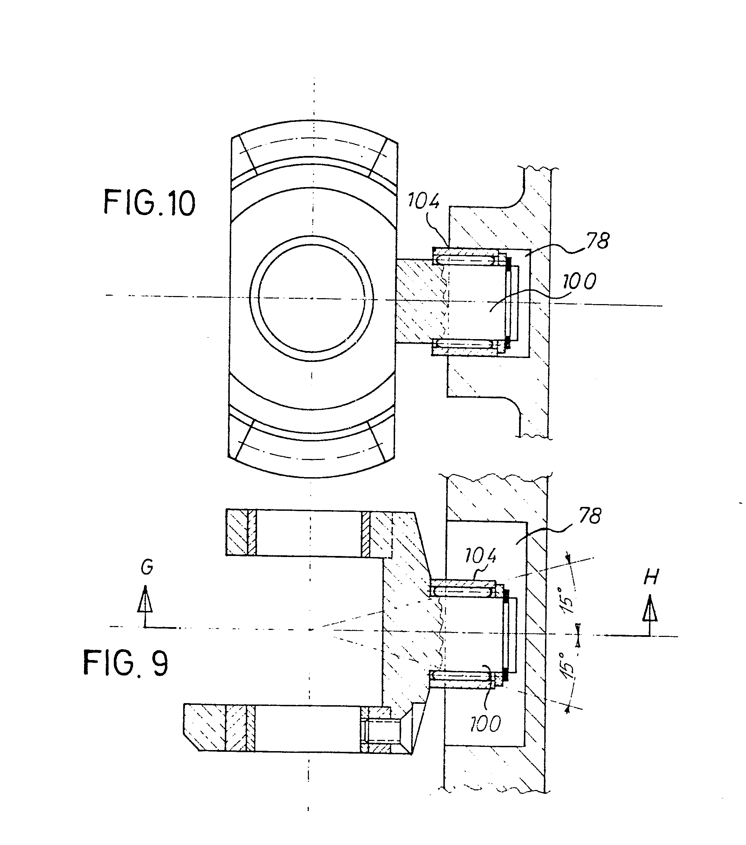

Fig. 9    zeigt eine abgewandelte Ausführungsform in
          einer Darstellung ähnlich Fig. 7.

Fig. 10   zeigt diese Ausführungsform in einer Darstellung ähnlich Fig. 8.

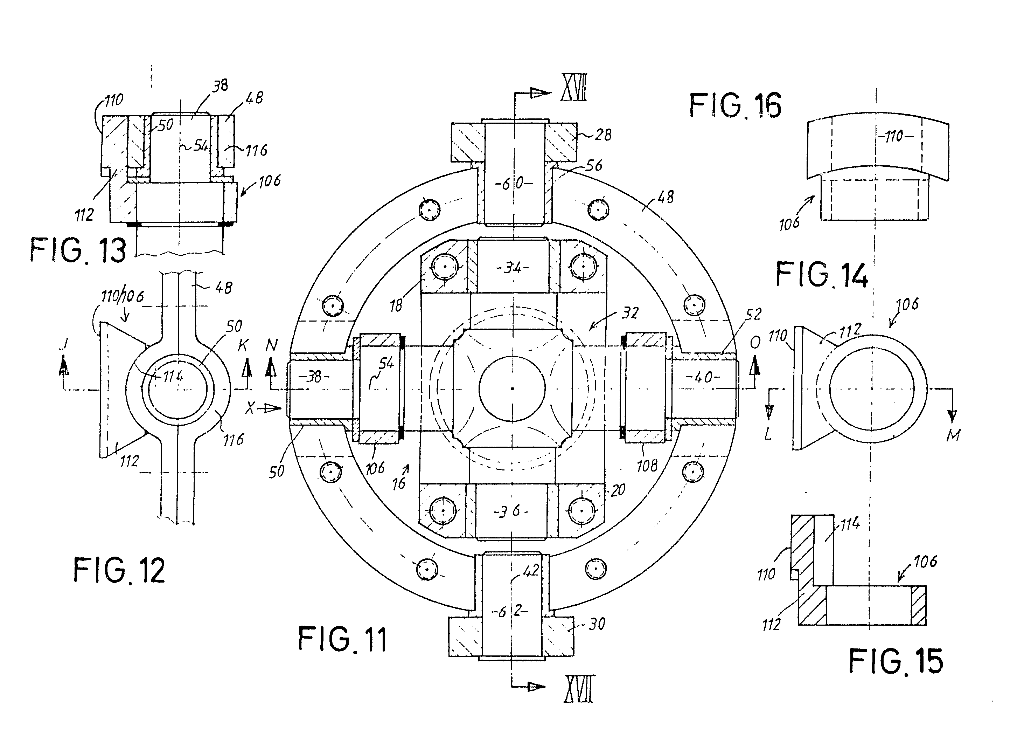

Fig. 11   zeigt eine Längsansicht eines Gelenks, welches
          für einen festen Winkelversatz zwischen Eingangsachse und Ausgangsachse eingerichtet ist.

Fig. 12   zeigt eine abgebrochene Ansicht in Richtung
          des Pfeils X von Fig. 11.

Fig. 13   zeigt einen Schnitt längs der Linie J-K von
          Fig. 12.

Fig. 14   zeigt im einzelnen einen bei der Konstruktion
          von Fig. 11 verwendeten Gleitschuh.

Fig. 15   zeigt einen Schnitt längs der Linie L-M von
          Fig. 14.

Fig. 16   ist eine Ansicht von links in Fig. 14.

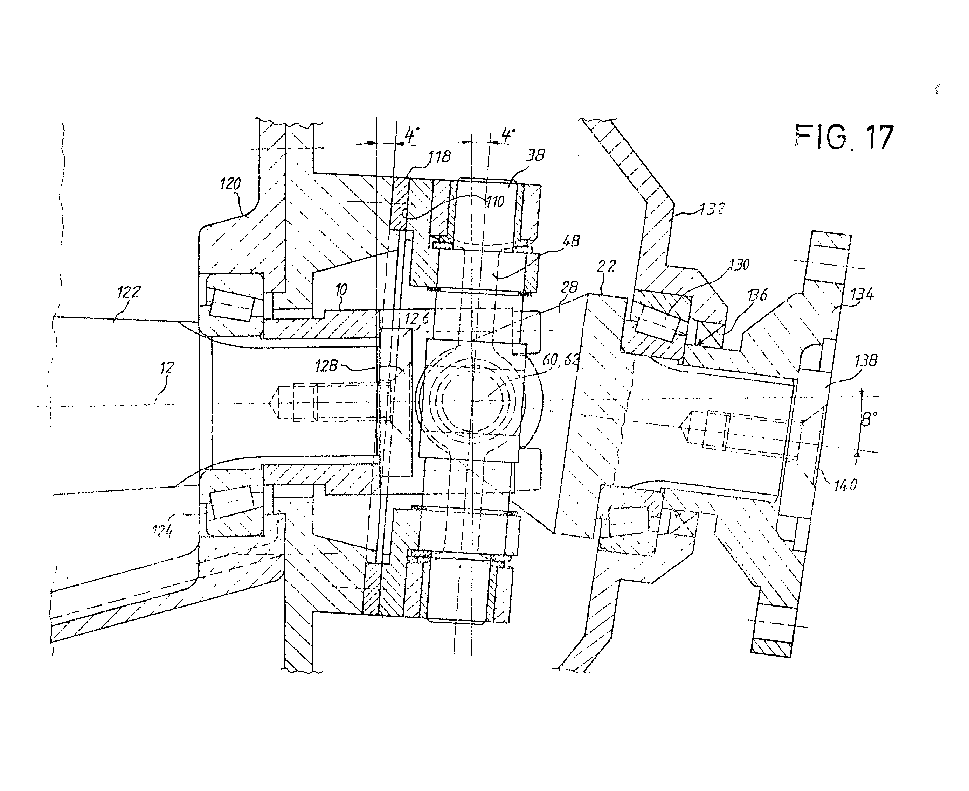

Fig. 17   zeigt einen Schnitt längs der Linie XVII-XVII
          von Fig. 11.

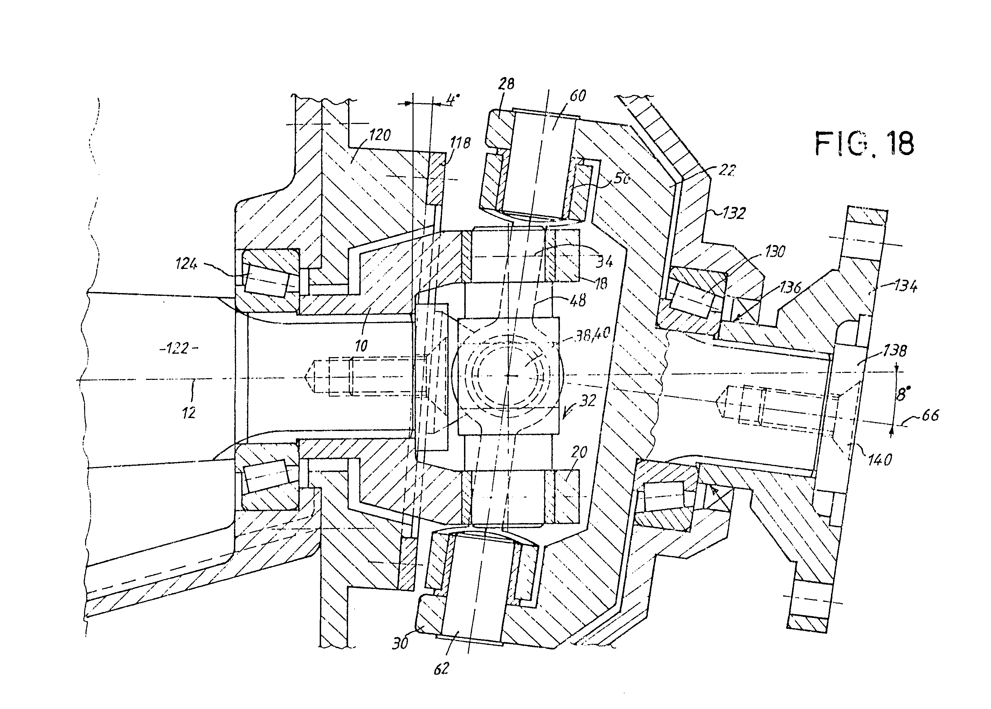

Fig. 18    zeigt das Gelenk nach einer Verdrehung von
90° gegenüber der Stellung von Fig. 17.

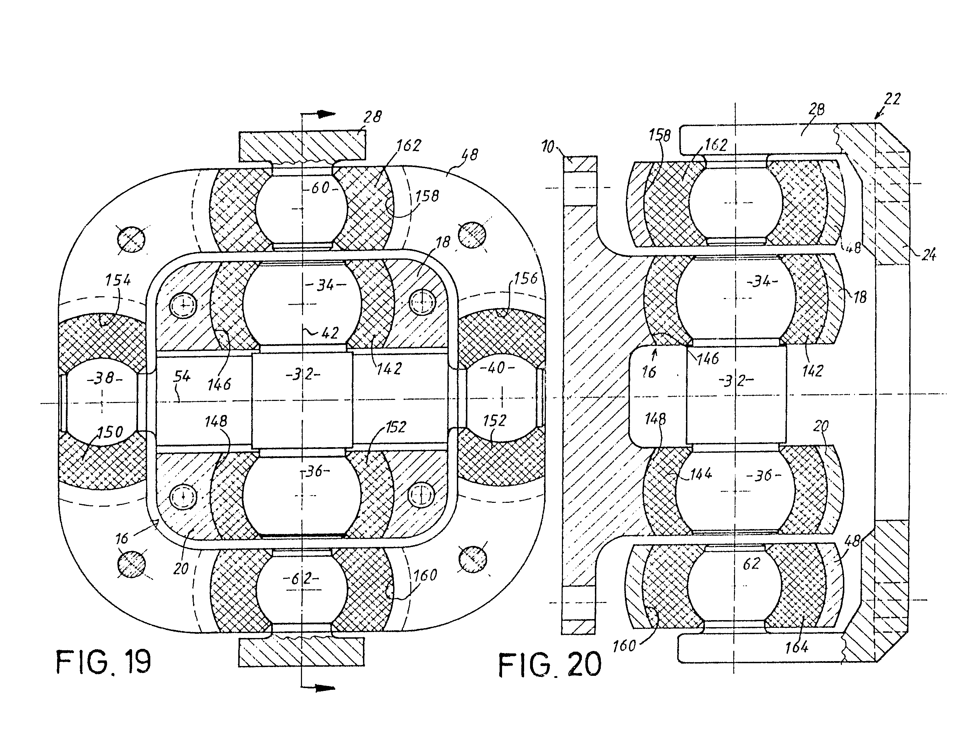

Fig. 19    zeigt in einer Längsansicht, teilweise im
Schnitt, eine abgewandelte Ausführungsform,
bei welcher die Teile in den Gelenken durch
Gummimassen elastisch aneinander gefesselt
sind, so daß die Festlegung der Lage des
Ringes dynamisch durch Rückstellkräfte erfolgt.

Fig. 20    zeigt einen Längsschnitt durch das Gelenk von
Fig. 19.

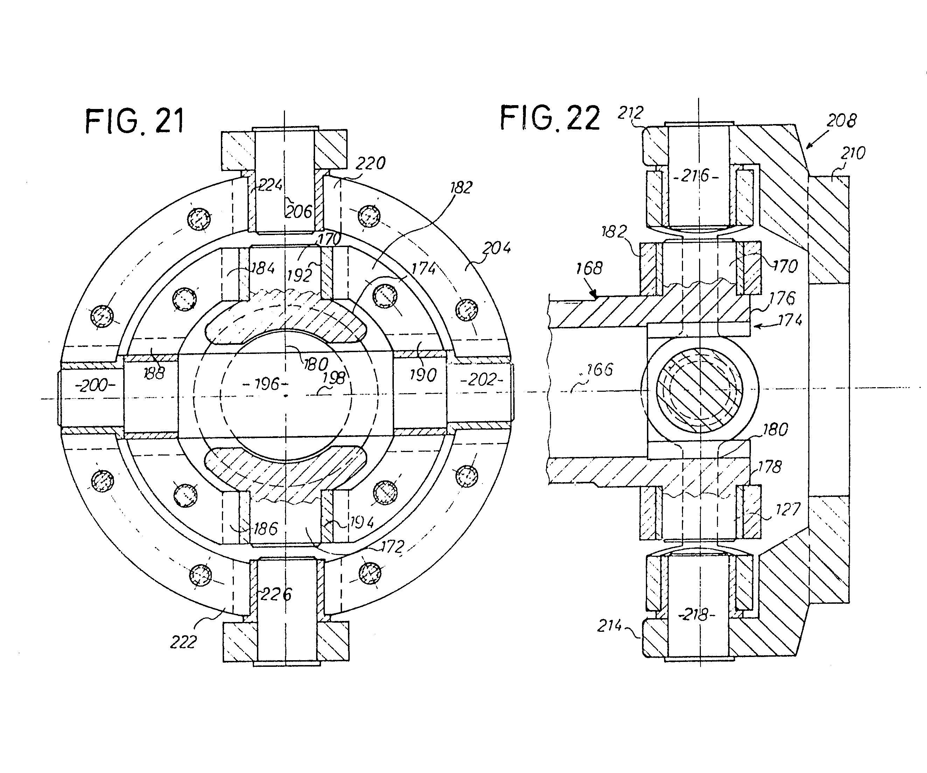

Fig. 21    zeigt eine weitere Ausführungsform eines homokinetischen Gelenks.

Fig. 22    zeigt einen Längsschnitt durch das Gelenk von
Fig. 21.

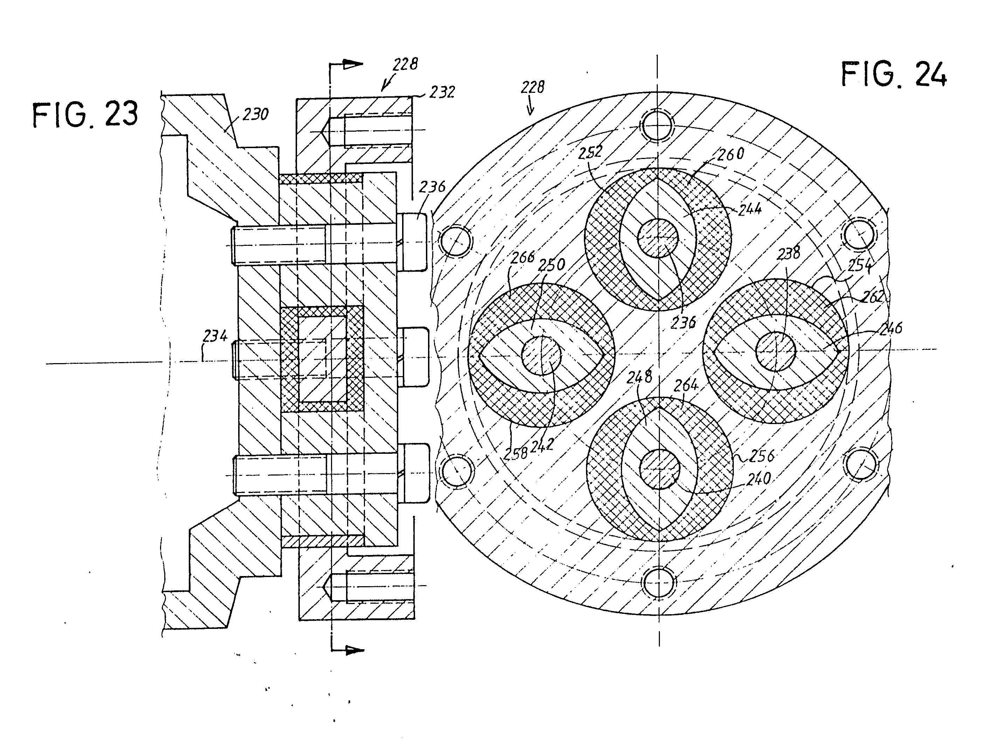

Fig. 23    zeigt in einem Längsschnitt eine in Umfangsrichtung elastische Kupplung, die zusätzlich
in einem Gelenk der vorliegenden Art vorgesehen werden kann.

Fig. 24    ist ein Schnitt längs der Linie XXIV-XXIV
von Fig. 23.

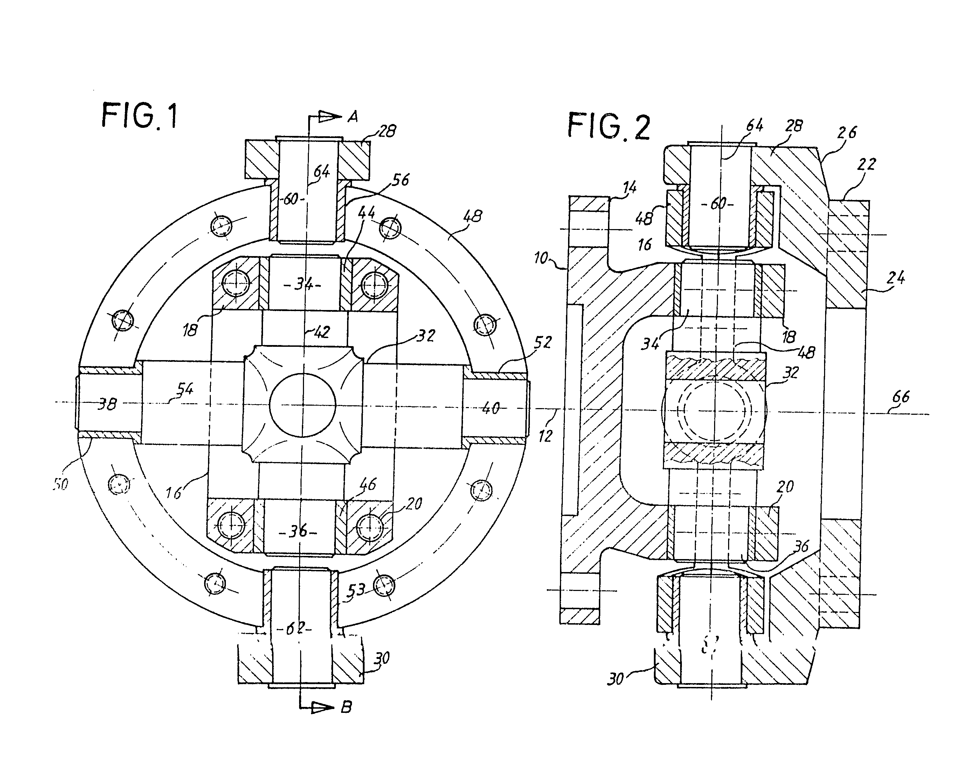

In Fig. 1 und 2 ist mit 10 ein um eine Eingangsachse 12
drehbares Antriebsglied bezeichnet. Das Antriebsglied
weist bei dem Ausführungsbeispiel einen Flansch 14 und
einen gabelförmigen Ansatz 16 mit zwei Schenkeln 18 und
20 auf.

Ein Abtriebsglied 22 enthält einen Flansch 24 sowie ebenfalls einen gabelförmigen Ansatz 26 mit zwei Schenkeln 28 und 30. Ein Zwischenglied 32 wird von einem Kreuzkörper mit zwei zueinander senkrechten Paaren von diametral einander gegenüberliegenden Lagerzapfen 34,36 bzw. 38,40 gebildet. Das Zwischenglied 32 ist mit dem ersten Paar von Lagerzapfen 34,36 in dem gabelförmigen Ansatz 16 des Antriebsgliedes 10 um eine erste Achse 42 verdrehbar gelagert. Die Lagerung erfolgt bei dem dargestellten Ausführungsbeispiel mittels Lagerbuchsen 44,46. Stattdessen können aber auch Wälzlager vorgesehen sein.

Das zweite Paar von Lagerzapfen 38 und 40 ragt radial über das erste Paar 34,36 hinaus. Das Zwischenglied 32 und der gabelförmige Ansatz 16 sind von einem Ring 48 umgeben. Dieser Ring 48 ist auf dem zweiten Paar von Lagerzapfen 38,40 über Lagerbuchsen 50,52 um eine zweite, zu der ersten Achse 42 senkrechte Achse 54 verdrehbar gelagert. Der Ring 48 ist wiederum mit Lagerbuchsen 56,58 auf Lagerzapfen 60,62 drehbar gelagert, die fluchtend von den beiden Schenkeln 28 und 30 des gabelförmigen Ansatzes 26 des Abtriebsgliedes 22 radial einwärts ragen. Dadurch ist der Ring 48 um eine dritte Achse 64 relativ zu dem Abtriebsglied 26 verdrehbar, die senkrecht zu der Ausgangsachse 66, um welche das Abtriebsglied 26 rotiert, und senkrecht zu der zweiten Achse 54 verläuft.

Es ist erkennbar, daß sowohl die erste Achse 42 als auch die dritte Achse 64 stets in einer gemeinsamen Ebene liegen, die jeweils senkrecht zu der zweiten Achse 54 verläuft. Es erfolgt daher eine homokinetische Übertragung der Antriebsbewegung.

Das Gelenk, wie es in Fig. 1 und 2 dargestellt ist, ist jedoch unterbestimmt, so daß zusätzliche Mittel vorgesehen werden müssen, welche die Lage des Ringes 48 festlegen.

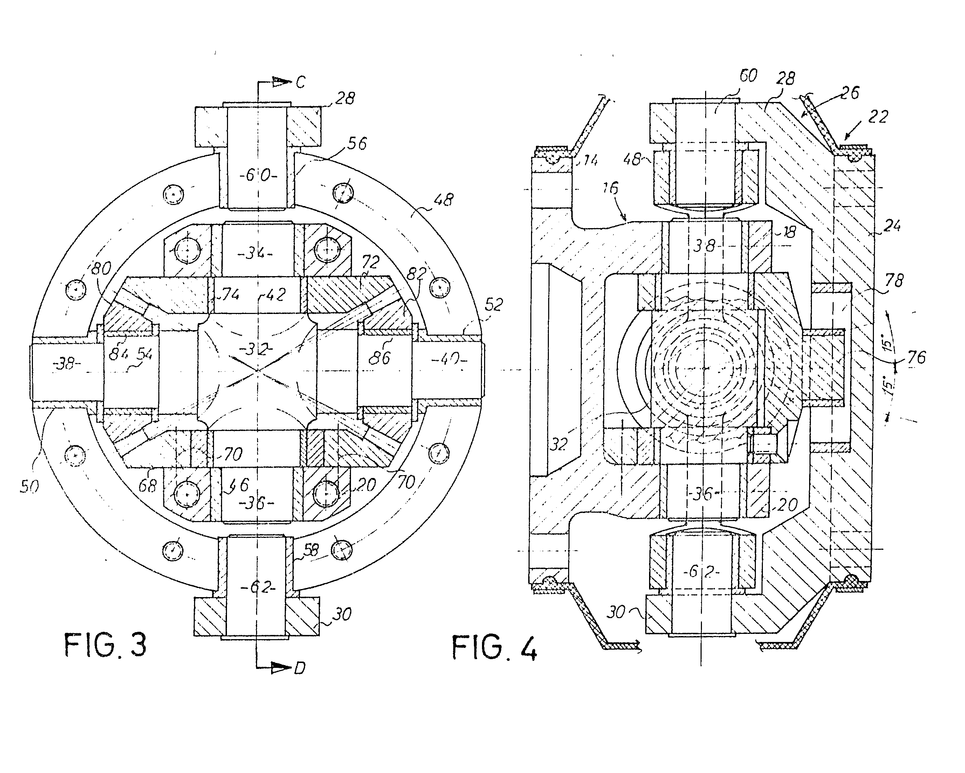

Ein Gelenk dieser Art, welches eine Veränderung des Winkelversatzes zwischen Eingangswelle und Ausgangswelle gestattet, ist in den Figuren 3 bis 7 dargestellt. Der Grundaufbau dieses Gelenks ist der gleiche wie in Fig. 1 und 2, und entsprechende Teile sind daher mit den gleichen Bezugzeichen versehen wie dort.

Zur Festlegung der Lage des Ringes 48 sind folgende Bauteile vorgesehen:

Ein erstes Kegelrad 68 ist auf dem einen Lagerzapfen 36 des ersten Paares gelagert und mit dem Schenkel 20 des gabelförmigen Ansatzes 16 durch Schrauben 70 fest verbunden. Ein zweites Kegelrad 72 ist mit einer Lagerbuchse 74 drehbar auf dem anderen Lagerzapfen 34 des ersten Paares gelagert und mit einem Führungsstück 76 verbunden. Das Führungsstück 76 gleitet in einer in dem Abtriebsglied 22 vorgesehenen Führung 78, die in einer durch die erste Achse 42 gehenden Ebene verläuft und eine Schwenkbewegung um die zweite Achse 54 zuläßt. Ein drittes und viertes Kegelrad 80 und 82 sind mit Lagerbuchsen 84 bzw. 86 drehbar auf den beiden Lagerzapfen 38 und 40 des zweiten Paares gelagert und stehen mit dem ersten und dem zweiten Kegelrad 68 und 72 in Eingriff.

Wie am besten aus den Figuren 5 bis 7 ersichtlich ist, bildet das zweite Kegelrad 72 einen Körper von rechteckiger Grundform, der die Kegelverzahnungen nur an den beiden kreisbogenförmigen Schmalseiten 88,90 aufweist. Das Kegelrad 72 ist über einen in der Mitte der einen Längsseite sich etwa parallel zur Achse des Kegelrads 72 erstreckenden Arm 92 mit einem Ring 94 verbunden. Der Ring 94 ist mit einer Lagerbuchse 96 innerhalb eines Durchbruchs 98 des ersten Kegelrads 68 auf dem Lagerzapfen 36 gelagert. Der Arm 92 trägt ein Führungsstück 76, das sich radial zu der Achse des Kegelrads 72 erstreckt und, wie aus Fig. 6 ersichtlich

0011159

ist, rechteckigen Querschnitt besitzt. Der Arm 92 sitzt in einem sektorförmigen Ausschnitt 102 des Kegelrades 68, wie am besten aus Fig. 5 ersichtlich ist. Infolgedessen kann sich das Kegelrad 68 in einem begrenzten Winkelbereich relativ zu dem Kegelrad 72 verdrehen.

Das Führungsstück 76 ist, wie gesagt, in der Führung 78 gehalten.

Bei einer Knickbewegung des Abtriebsgliedes 22 gegenüber dem als feststehend angesehenen Antriebsglied 10 um eine in der Papierebene liegende vertikale Achse in Fig. 4 wird durch die Führung 78 das Kegelrad 72 mit verdreht. Das Kegelrad 72 verdreht die beiden Kegelräder 80 und 82 gegensinnig, wodurch diese an dem feststehenden Kegelrad 68 "hinauf" bzw. "hinunterlaufen", wodurch der Ring 48 um den halben Schwenkwinkel zwischen Eingangs- und Ausgangsachse um die Achse 42 verdreht wird.

Eine Verdrehung des Abtriebsgliedes 22 um eine zur Papierebene senkrechte Achse wird durch das Führungsstück 76 in der Führung 78 zugelassen. Mit dem Ausgangsglied 22 wird der Ring 48 über die Zapfen 60 und 62 in entsprechender Weise verdreht. Der Ring 48 dreht sich dabei auf den Zapfen 38 und 40.

Bei der Ausführungsform nach Fig. 9 und 10 ist das rechteckige Führungsstück 76 durch einen kreisrunden Zapfen 100 ersetzt, welcher über ein Rollenlager 104 in der Führung 78 geführt ist.

Die Figuren 11 bis 18 zeigen ein homokinetisches Gelenk, welches für einen festen Winkelversatz zwischen Eingangsachse und Ausgangsachse eingerichtet ist. Auch bei diesem Gelenk ist der Grundaufbau der gleiche wie bei dem Gelenk nach Fig. 1 und 2, so daß für entsprechende Teile die gleichen Bezugszeichen benutzt werden wie dort.

Bei der Ausführungsform nach Fig. 11 bis 18 sind auf den Lagerzapfen 38 und 40 des zweiten Paares je ein Gleitschuh 106 bzw. 108 drehbar gelagert. Wie aus Fig. 13 am besten ersichtlich ist, weist jeder Gleitschuh eine parallel zu der zweiten Achse 54 verlaufende Planfläche 110 auf. Diese Planfläche 110 ist an einem Arm 112 vorgesehen, der sich parallel zu der zweiten Achse 54 um den Ring 48 und das an dem vorgesehenen Lager für den Lagerzapfen 38 herumerstreckt. Der Arm 112 weist eine konkav-zylindrische Innenfläche 114 auf, die an der Außenfläche des Lagers 116 anliegt.

Wie aus Fig. 17 ersichtlich ist, liegen die Gleitschuhe 106,108 mit den Planflächen 110 an einem Gleitring 118 an, der eine ebene Anlagefläche bildet und an einem Gehäuse 120 vorgesehen ist. Die Normale der ebenen Anschlagfläche fällt mit der Winkelhalbierenden zwischen Eingangsachse 12 und Ausgangsachse 66 zusammen. Wenn beispielsweise, wie dargestellt, der Winkel zwischen Eingangs- und Ausgangsachse $8^O$ beträgt, dann ist die Neigung der ebenen Anlagefläche $4^O$. Parallel zu dieser ebenen Anlagefläche stellt sich infolge der Gleitschuhe auch der Ring 48 durch Verschwenkung um die Achse 42 ein.

Bei der Ausführungsform nach Fig. 17 ist das Antriebsglied 10 mit einer Welle 122 verbunden, die über Rollenlager 124 in dem Gehäuse 120 gelagert ist. Die Verbindung erfolgt mittels eines Klemmstücks 126, das durch eine Schraube 128, die in die Stirnfläche der Welle 122 eingeschraubt ist, gegen die in der Figur rechte Stirnfläche des Antriebsglieds 110 festgezogen wird. Die in der Figur linke Stirnfläche des Antriebsglieds 110 wird dabei an den inneren Laufring des Wälzlagers 124 gedrückt. Das Abtriebsglied 22 ist durch ein Wälzlager 130 in einem Gehäuse 132 so gelagert,

0011159

daß die Ausgangsachse 66 mit der Eingangsachse 12 einen festen Winkel von $8^{\circ}$ bildet. Ein Abtriebsflansch 134, der über ein Kugellager 136 im Gehäuse 132 gelagert ist, ist mittels eines Druckstücks 138 gegen den Innenring des Wälzlagers 130 festgezogen. Das Druckstück 138 wird mittels einer Schraube 140, die in der Stirnfläche des Abtriebsglieds 22 sitzt, festgezogen.

Bei der Ausführungsform nach Fig. 19 und 20 sind die Drehlager durch gummielastische Verbindungen ersetzt, die eine elastische Relativverdrehung der einzelnen Teile gegeneinander zulassen. Hierdurch ist die Lage des Ringes 48 "dynamisch", d.h. durch die elastischen Rückstellkräfte festgelegt. Auch in diesen Figuren sind für entsprechende Teile die gleichen Bezugszeichen benutzt wie in Fig. 1.

Bei der Ausführungsform nach der Fig. 19 und 20 enthalten als Mittel zur Festlegung der Lage des Ringes alle Schwenklager eine gummielastische Masse, die zwischen einem Lagerzapfen und einer diesen mit Abstand umgebenden Lagerhülse einvulkanisiert ist, so daß sie bei einer Verdrehung auf Torsion beansprucht wird. Dabei sind die Lagerzapfen ballig ausgebildet und sind von hohlkugelabschnittförmigen Lagerhülsen umgeben.

Im einzelnen sind die ballig ausgebildeten Lagerzapfen 34 und 36 des Zwischengliedes 32 über einvulkanisierte Gummimassen 142 bzw. 144 mit den hohlkugelabschnittförmigen Lagerflächen 146 bzw. 148 verbunden, die in den Schenkeln 18 und 20 des gabelförmigen Ansatzes 16 des Antriebsgliedes 10 gebildet sind.

Die ballig ausgebildeten Lagerzapfen 38 und 40 sind über Gummimassen 150,152 mit den hohlkugelabschnittförmigen Lagerflächen 154 bzw. 156 des Ringes 48 verbunden. Schließlich ist der Ring 48 mit hohlkugelabschnittförmigen Lagerflächen 158 bzw. 160 versehen, welche die ballig ausgebildeten Lagerzapfen 60 und 62 umgeben und mit diesen über Gummimassen 162 bzw. 164 verbunden sind.

Bei dem Ausführungsbeispiel nach Fig. 21 und Fig. 22 ist eine andere Form des Zwischenglieds gewählt.

Ein um eine Eingangsachse 166 drehbares Antriebsglied 168 weist Lagerzapfen 170,172 auf, die sich von einem gabelförmigen Ansatz 174 mit Schenkeln 176,178 radial nach außen erstrecken. Die Zapfen 170 und 172 sind dabei diametral einander gegenüberliegend und fluchtend angeordnet. Sie definieren eine zu der Antriebsachse 166 senkrechte erste Achse 180. Das Zwischenglied 182 ist ein Ring mit zwei zueinander senkrechten Paaren von diametral einander gegenüberliegenden Lagern 184,186 bzw. 188,190. Mit dem ersten Paar von Lagern 184,186 ist das Zwischenglied 182 über Lagerbuchsen 192,194 auf den Lagerzapfen 170 bzw. 172 um die erste Achse 180 verdrehbar gelagert. Mit dem zweiten Paar von Lagern 188,190 ist das Zwischenglied 182 auf einer Welle 196 gelagert. Die Welle erstreckt sich längs der zweiten Achse 198 diametral durch das Zwischenglied 182 und mit Spiel durch den gabelförmigen Ansatz 174 zwischen dessen beiden Schenkeln 176'und 178. Mit ihren Enden 200,202 ragt die Welle 196 radial über das ringförmige Zwischenglied 182 hinaus. Der das Zwischenglied 182 umgebende Ring 204 ist auf den Enden 200 und 202 der Welle 196 um die zweite Achse 198 verdrehbar gelagert. Der Ring 204 ist wiederum um die dritte Achse 206 in einem gabelförmigen Ansatz 208 eines Abtriebsgliedes 210 gelagert. Zu diesem Zweck sind an den Schenkeln 212 und 214 des gabelförmigen Ansatzes 208 radial nach innen ragende Zapfen 216 bzw. 218 vorgesehen, auf denen der Ring 204 mit Lagern 220 und 222
über Lagerbuchsen 224 und 226 gelagert ist. Die Lager
und Lagerzapfen können in ähnlicher Weise wie in
Fig. 19 und 20 durch Gummimasse elastisch gefesselt sein.
Dies hat bei der Ausführungsform nach Fig. 21 und
Fig. 22 den Vorteil, daß in beiden Knickrichtungen die
gleiche Anzahl von gummielastischen Lagern vorhanden
ist.

Das Antriebs- und/oder Abtriebsglied kann eine in
Umfangsrichtung elastische Kupplung enthalten. Ein
Beispiel für eine solche elastische Kupplung ist in
den Figuren 23 und 24 dargestellt.

Die Kupplung 228 enthält ein Kupplungsantriebsglied
230 und ein Kupplungsabtriebsglied 232. An dem
Kupplungsantriebsglied sind auf einem Kreisbogen um
dessen Achse 234 herum vier Bolzen 236,238,240 und 242
jeweils um 90$^\circ$ gegeneinander winkelversetzt angeordnet. Jeder Bolzen trägt einen ovalen Druckkörper
244,246,248 bzw. 250, wobei die Längsachse des ovalen
Druckkörpers jeweils radial verläuft. Mit diesen
Druckkörpern sind die Bolzen in zylindrischen Ausnehmungen 252,254,256 bzw. 258 des Kupplungsabtriebsgliedes 232 angeordnet. Zwischen der Innenwandung
der Ausnehmungen 252 bis 258 und den Druckkörpern 244
bis 250 ist jeweils eine elastische Gummimasse
260,262,264,266 einvulkanisiert.

0011159

Patentansprüche

1. Homokinetisches Gelenk ·enthaltend:

ein um eine Eingangsachse drehbares Antriebsglied,

ein Zwischenglied, das um eine zu der Eingangsachse senkrechte erste Achse verdrehbar an dem
Antriebsglied angelenkt ist, .

ein um eine. Ausgangsachse drehbares Abtriebsglied
und

Kupplungsmittel zwischen dem Zwischenglied und
dem Abtriebsglied, welche einerseits um eine zu
der ersten Achse senkrechte zweite Achse verdrehbar an dem Zwischenglied und andererseits um
eine zu der Ausgangsachse senkrechte dritte
Achse verdrehbar an dem Abtriebsglied angelenkt
sind,

dadurch gekennzeichnet,

daß die Kupplungsmittel von einem Ring (48)
gebildet sind, welcher das Zwischenglied (32)
umgibt,

daß die dritte Achse (64), um welche dieser
Ring (48) verdrehbar an dem Abtriebsglied (22)
gelagert ist senkrecht zu der zweiten Achse (54)
verläuft und

daß Mittel (Fig. 3, Fig. 19) zur Festlegung der Lage des Ringes (48) vorgesehen sind.

2. Homokinetisches Gelenk nach Anspruch 1, dadurch gekennzeichnet,

daß das Zwischenglied (32) ein Kreuzkörper mit zwei zueinander senkrechten Paaren von diametral einander gegenüberliegenden Lagerzapfen (34,36 und 38,40) ist,

daß das Zwischenglied (32) mit dem ersten Paar von Lagerzapfen (34,36) in einem gabelförmigen Ansatz (16) des Antriebsgliedes (10) um die erste Achse (42) verdrehbar gelagert ist,

daß das zweite Paar von Lagerzapfen (38,40) radial über das erste Paar (34,36) hinausragt und der das Zwischenglied (32) und den gabelförmigen Ansatz (16) umgebende Ring (48) auf dem zweiten Paar von Lagerzapfen (38,40) um die zweite Achse (54) verdrehbar gelagert ist und

daß der Ring (48) um die dritte Achse (64) verdrehbar in einem gabelförmigen Ansatz (26) des Abtriebsgliedes (22) gelagert ist.

3. Homokinetisches Gelenk nach Anspruch 2, dadurch gekennzeichnet, daß die Mittel zur Festlegung der Lage des Ringes (48) folgende Bauteile enthalten:

(a)  ein erstes Kegelrad (68), das auf dem einen Lagerzapfen (36) des ersten Paares sitzt und mit dem gabelförmigen Ansatz (16) des Antriebsgliedes (10) fest verbunden ist,

(b) ein zweites Kegelrad (72), das drehbar auf dem anderen Lagerzapfen (34) des ersten Paares gelagert und mit einem Führungsstück (76) verbunden ist, welches in einer in dem Abtriebsglied (22) vorgesehenen Führung (78) gleitet, die in einer durch die erste Achse (42) gehenden Ebene verläuft und eine Schwenkbewegung um die zweite Achse (54) zuläßt,

(c) ein drittes und viertes Kegelrad (80,82) die drehbar auf den beiden Lagerzapfen (38,40) des zweiten Paares gelagert sind und mit dem ersten und dem zweiten Kegelrad (68,72) in Eingriff stehen.

4. Homokinetisches Gelenk nach Anspruch 2, dadurch gekennzeichnet,

daß die Normale der Ringebene in der Winkelhalbierenden der Eingangs- und Ausgangsachse (12 bzw. 66) gehalten wird.

5. Homokinetisches Gelenk nach Anspruch 4, mit festem Winkelversatz zwischen Eingangs- und Ausgangsachse, dadurch gekennzeichnet,

daß auf den Lagerzapfen (38,40) des zweiten Paares je ein Gleitschuh (106,108) drehbar gelagert ist, der eine parallel zu der zweiten Achse (42) verlaufende Planfläche (110) aufweist, und

daß jeder Gleitschuh (106,108) mit dieser Planfläche (110) an einer ebenen Anlagefläche (118) anliegt, deren Normale mit der Winkelhalbierenden zwischen Eingangs- und Ausgangsachse (12,66) zusammenfällt.

6. Homokinetisches Gelenk nach Anspruch 1, dadurch gekennzeichnet,

daß das Zwischenglied (182) ein Ring mit zwei zueinander senkrechten Paaren von diametral einander gegenüberliegenden Lagern (184,186 und 188,190) ist,

daß das Zwischenglied (182) mit dem ersten Paar von Lagern (184,186) auf Lagerzapfen (170,172), die sich von einem gabelförmigen Ansatz (174) des Antriebsgliedes (168) radial nach außen erstrecken, um die erste Achse (180) verdrehbar gelagert ist,

daß das Zwischenglied (182) mit dem zweiten Paar von Lagern (188,190) auf einer Welle (196) gelagert ist, die sich längs der zweiten Achse (198) diametral durch das Zwischenglied (182) und mit Spiel durch den gabelförmigen Ansatz (174) erstreckt und an ihren Enden (200,202) radial über das Zwischenglied (182) hinausragt,

daß der das Zwischenglied (182) umgebende Ring (204) auf den Enden (200,202) der Welle (196) um die zweite Achse (198) verdrehbar gelagert ist und

daß dieser Ring (204) um die dritte Achse (206) verdrehbar in einem gabelförmigen Ansatz (208) des Abtriebsgliedes (210) gelagert ist.

7. Homokinetisches Gelenk nach einem der Ansprüche 1 bis 6, dadurch gekennzeichnet,

daß als Mittel zur Festlegung der Lage des Ringes alle Schwenklager eine gummielastische Masse enthalten, die zwischen einem Lagerzapfen und einer diesen mit Abstand umgebenden Lagerfläche einvulkanisiert ist, so daß sie bei einer Verdrehung auf Torsion beansprucht wird.

8. Homokinetisches Gelenk nach Anspruch 7, dadurch gekennzeichnet, daß die Lagerzapfen ballig ausgebildet sind und von hohlkugelabschnittförmigen Lagerflächen umgeben sind.

9. Homokinetisches Gelenk nach einem der Ansprüche 1 bis 8, dadurch gekennzeichnet, daß das Antriebs- und/oder Abtriebsglied eine in Umfangsrichtung elastische Kupplung enthält.

FIG.1

FIG.2

FIG. 3

FIG. 4

FIG. 5

FIG. 8

A

76

102

98

88

72

92

76

68

VII

90

VII

E

92

76 F

76

94 96

FIG. 6

B

VII

FIG. 7

FIG.10

104

78

100

G

FIG. 9

78

104

100

15°

15°

15°

H

0011159

FIG.16

FIG.14

FIG.15

FIG.11

FIG.13

FIG.12

FIG. 17

FIG. 18

0011159

FIG. 20

FIG. 19

FIG. 21

FIG. 22

FIG. 23

FIG. 24

Europäisches
Patentamt

**EUROPÄISCHER RECHERCHENBERICHT**

0011159
Nummer der Anmeldung

EP 79104102.3

| | EINSCHLÄGIGE DOKUMENTE | | KLASSIFIKATION DER ANMELDUNG (Int.Cl.⁴) 3 |
|---|---|---|---|
| Kategorie | Kennzeichnung des Dokuments mit Angabe, soweit erforderlich, der maßgeblichen Teile | betrifft Anspruch | |
| X | DE - A1 - 2 454 011 (F.NICOLETTI) + Gesamt + & US-A-3 965 700 -- | 1,2 | F 16 D 3/26 F 16 D 3/28 |
| X | US - A - 3 456 458 (J.B. DIXON) + Gesamt + -- | 1-3 | |
| A | FR - A - 2 185 270 (A.EHRENREICH & CIE) + Gesamt + -- | 1,6,7 | RECHERCHIERTE SACHGEBIETE (Int. Cl.⁴ 3 |
| A | FR - A1 - 2 271 444 (GLAENZER SPICER) + Gesamt + -- | 1,5,6 | F 16 D 3/00 |
| A | DE - B - 1 292 961 (MORSE CHAIN) + Fig. 1 und 2 + ---- | 9 | |

| X | Der vorliegende Recherchenbericht wurde für alle Patentansprüche erstellt. |
|---|---|

| Recherchenort | Abschlußdatum der Recherche | Prüfer |
|---|---|---|
| WIEN | 21-01-1980 | ROUSSARIAN |

EPA form 1503.1 06.78